# EUROPEAN PATENT APPLICATION

(11) **EP 4 023 701 A1**
(43) Date of publication of application: **06.07.2022**
(21) Application number: 20217857.0
(22) Date of filing: 30.12.2020
(51) Int. Cl.: C08J 5/18, C08J 7/06

(54) **FILM MATERIAL WITH TACTILE STRUCTURE AND METHOD FOR PRODUCING THE SAME**

(71) Applicant: G-Fun Industrial Corporation, Taoyuan City 328 (TW)
(72) Inventor: TSAI, Chiu-Hsiung, 328 Taoyuan City (TW)
(74) Representative: VKK Patentanwälte PartG mbB

(57) **Abstract**

A film material (100) with a tactile structure and a method for producing the same are provided. The film material (100) includes a polymer resin film (1) and a tactile structure module (2). A surface (11) of the polymer resin film (1) is colored to form a grid-like visual pattern (12). The tactile structure module (2) includes solid bodies (21) disposed on the surface (11) of the polymer resin film (1) at intervals. Each solid body (21) includes a polymer resin material (211) and insoluble solid mixtures (212) dispersed in the polymer resin material (211). At least a part of the insoluble solid mixtures (212) are located in a surface layer of the solid body (21) and partially exposed to an external environment for a user to touch. The solid bodies (21) have visible light transmittance, so that the grid-like visual pattern (12) is capable of being seen through the solid bodies (21), and is visible on a side of the surface (11) of the polymer resin film (1).

## Description

### FIELD OF THE DISCLOSURE

The present disclosure relates to a film material, and more particularly to a film material with a tactile structure and a method for producing the same.

### BACKGROUND OF THE DISCLOSURE

A conventional film material with mesh cloth requires a layer of mesh cloth to be attached to a layer of base cloth as double layer, which is relatively complicated in processing. In addition, since the above-mentioned film material has a double-layer cloth structure, the film material has problems of thicker thickness and heavier weight. Accordingly, for some end-application products (i.e., functional clothing) that require simple processing procedures, thinner thickness and lighter weight, the above-mentioned film material obviously cannot meet needs of these end-application products.

### SUMMARY OF THE DISCLOSURE

In response to the above-referenced technical inadequacies, the present disclosure provides a film material with a tactile structure and a method for producing the same.

In one aspect, the present disclosure provides a film material with a tactile structure as single layer. The film material includes a polymer resin film and a tactile structure module. The tactile structure module includes a plurality of solid bodies. The plurality of solid bodies are arranged on a surface of the polymer resin film at intervals. A composition of each of the solid bodies includes: a polymer resin material and a plurality of insoluble solid mixtures dispersed in the polymer resin material. At least a part of the insoluble solid mixtures in the plurality of insoluble solid mixtures are located in a surface layer of the solid body and partially exposed to an external environment for a user to touch.

In another aspect, the present disclosure provides a method for producing a film material, which includes: providing a polymer resin film; printing an ink material on a surface of the polymer resin film according to a predetermined pattern, and evaporating liquid components from the ink material, so that a grid-like visual pattern is formed on the surface of the polymer resin film; forming a plurality of liquid pastes on the surface of the polymer resin film; in which the plurality of liquid pastes are formed on the surface of the polymer resin film at intervals, and a composition of each of the liquid pastes includes: a polymer resin material and a plurality of insoluble solid mixtures dispersed in the polymer resin material; evaporating liquid components from the plurality of liquid pastes, so that the plurality of liquid pastes are respectively formed into a plurality of solid bodies that are adhered on the surface of the polymer resin film, and the plurality of solid bodies are partially covered on the grid-like visual pattern. In each of the solid bodies, at least a part of the insoluble solid mixtures in the plurality of insoluble solid mixtures are located in a surface layer of the solid body and partially exposed to an external environment for a user to touch. The plurality of solid bodies all have visible light transmittance, so that the grid-like visual pattern on the surface of the polymer resin film is capable of being seen through the plurality of solid bodies, and the grid-like visual pattern is visible on a side of the surface of the polymer resin film.

Therefore, the film material with a tactile structure as single layer and the method for producing the same provided by the present disclosure enable this film material to have the visual effect of having double-layer fabric (not triple layer). This sufficient mesh tactile effect under the condition of being lightweight has thin thickness by virtue of "a composition of each of the solid bodies including: a polymer resin material and a plurality of insoluble solid mixtures dispersed in the polymer resin material; in which at least a part of the insoluble solid mixtures in the plurality of insoluble solid mixtures are located in a surface layer of the solid body and partially exposed to an external environment for a user to touch" and by virtue of "the plurality of solid bodies all having visible light transmittance, so that the grid-like visual pattern on the surface of the polymer resin film is capable of being seen through the plurality of solid bodies, and the grid-like visual pattern is visible on a side of the surface of the polymer resin film."

These and other aspects of the present disclosure will become apparent from the following description of the embodiment taken in conjunction with the following drawings and their captions, although variations and modifications therein may be affected without departing from the spirit and scope of the novel concepts of the disclosure.

### BRIEF DESCRIPTION OF THE DRAWINGS

The present disclosure will become more fully understood from the following detailed description and accompanying drawings.
FIG. 1 is a perspective view of a film material according to a first embodiment of the present disclosure.
FIG. 2 is an exploded view of the film material of FIG. 1.
FIG. 3 is a cross-sectional view of the film material taken along a line III-III of FIG. 1.
FIG. 4 is a schematic diagram of the film material of FIG. 3 being touched by a user.
FIG. 5 is a schematic diagram of a first modified embodiment of solid bodies of FIG. 3.
FIG. 6 is a schematic diagram of a second modified embodiment of the solid bodies of FIG. 3.
FIG. 7 is a top view of a grid-like visual pattern according to the first embodiment of the present disclosure.
FIG. 8 is a schematic diagram of a first modified embodiment of the grid-like visual pattern of FIG. 7.
FIG. 9 is a schematic diagram of a second modified embodiment of the grid-like visual pattern of FIG. 7.
FIG. 10 is a schematic diagram of a third modified embodiment of the solid bodies of FIG. 3.
FIG. 11 is a schematic diagram of a fourth modified embodiment of the solid bodies of FIG. 3.
FIG. 12 is a schematic diagram of the film material of FIG. 3 being attached to a textile.
FIG. 13 is a cross-sectional view of a film material according to a second embodiment of the present disclosure.

### DETAILED DESCRIPTION OF THE EXEMPLARY EMBODIMENTS

The present disclosure is more particularly described in the following examples that are intended as illustrative only since numerous modifications and variations therein will be apparent to those skilled in the art. Like numbers in the drawings indicate like components throughout the views. As used in the description herein and throughout the claims that follow, unless the context clearly dictates otherwise, the meaning of "a", "an", and "the" includes plural reference, and the meaning of "in" includes "in" and "on". Titles or subtitles can be used herein for the convenience of a reader, which shall have no influence on the scope of the present disclosure.

The terms used herein generally have their ordinary meanings in the art. In the case of conflict, the present document, including any definitions given herein, will prevail. The same thing can be expressed in more than one way. Alternative language and synonyms can be used for any term(s) discussed herein, and no special significance is to be placed upon whether a term is elaborated or discussed herein. A recital of one or more synonyms does not exclude the use of other synonyms. The use of examples anywhere in this specification including examples of any terms is illustrative only, and in no way limits the scope and meaning of the present disclosure or of any exemplified term. Likewise, the present disclosure is not limited to various embodiments given herein. Numbering terms such as "first", "second" or "third" can be used to describe various components, signals or the like, which are for distinguishing one component/signal from another one only, and are not intended to, nor should be construed to impose any substantive limitations on the components, signals or the like.

### [First Embodiment]

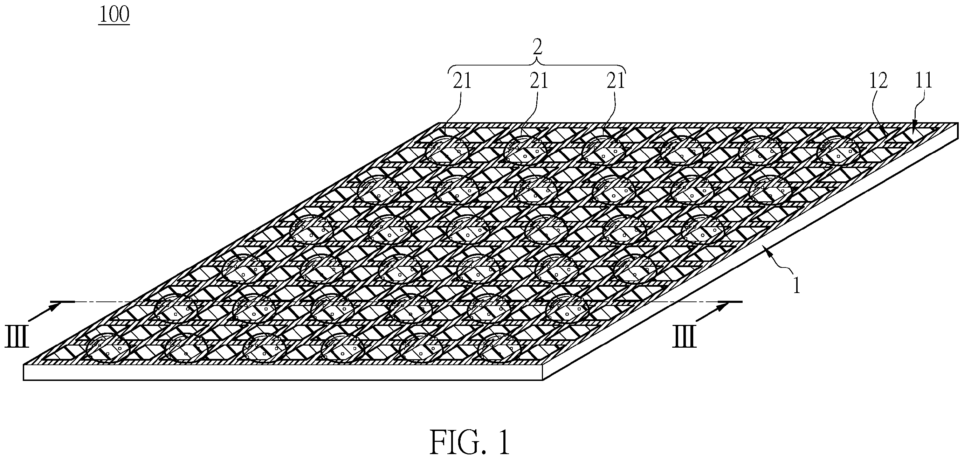

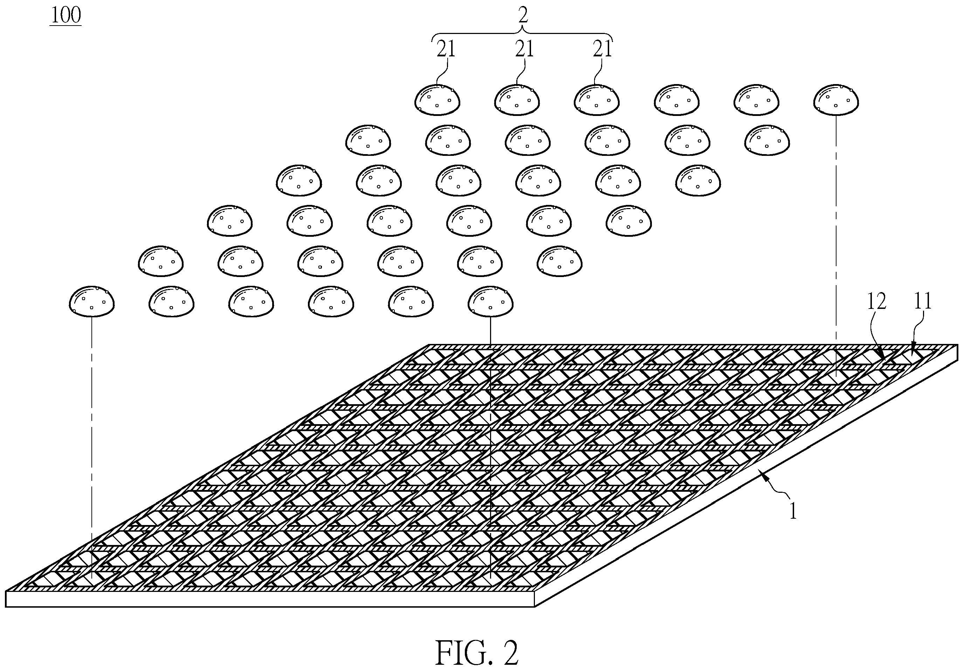

Referring to FIG. 1 to FIG. 3, a first embodiment of the present disclosure is illustrated. It should be noted that the relevant quantities and appearances mentioned in the corresponding drawings in the present embodiment are only used to specifically illustrate the implementation of the present disclosure for understanding the content of the present disclosure, and are not used to limit the protected range of the present disclosure.

The present embodiment discloses a film material 100, which includes a polymer resin film 1 and a tactile structure module 2 that is disposed on the polymer resin film 1.

The polymer resin film 1 has two opposite surfaces, and one surface 11 of the two surfaces of the polymer resin film 1 is colored to form a grid-like visual pattern 12.

The polymer resin film 1 is in the form of a thin film and has a thickness between 5 micrometers and 50 micrometers.

The polymer resin film 1 may be, for example, at least one of a polyurethane (PU) resin film, a thermoplastic polyurethane (TPU) resin film, a polytetrafluoroethylene (PTFE) resin film, a polyethylene (PE) resin film, a polypropylene (PP) resin film, a polyethylene terephthalate (PET) resin film, a latex film, a polyester elastomer film, and a polymer composite film. The above-mentioned polymer composite film is a film-like base material composed of two or more polymer materials. In the present embodiment, the polymer resin film 1 is preferably a polyurethane (PU) resin film, a thermoplastic polyurethane (TPU) resin film, a polyethylene terephthalate (PET), a latex film or a polyester elastomer film, but the present disclosure is not limited thereto.

The grid-like visual pattern 12 is a plane printing pattern with a grid pattern, which can be used to produce a visual effect of having another mesh layer disposed on the polymer resin film 1. In other words, the polymer resin film 1 can exhibit the visual effect of having double-layer fabric through the grid-like visual pattern 12, while actually having a structure with only a single-layer fabric.

The surface 11 of the polymer resin film 1 is approximately a flat surface. The grid-like visual pattern 12 is composed of a plurality of ink dots regularly arranged on the surface 11 of the polymer resin film 1. The plurality of ink dots and the surface 11 of the polymer resin film 1 are substantially coplanar to each other.

Since a thickness of the ink dots forming the grid-like visual pattern 12 is relatively thin (e.g., not greater than 20 micrometers), there is no significant difference in height between the grid-like visual pattern 12 and the surface 11 of the polymer resin film 1. Accordingly, the grid-like visual pattern 12 formed by the plurality of ink dots can only be used to provide the visual effect of having another mesh layer disposed on the polymer resin film 1, but cannot be used to provide a tactile effect and a touch feeling of a mesh fabric.

In the grid-like visual pattern 12, the plurality of ink dots are water-based polymer ink dots.

The water-based polymer ink dots may, for example, include a water-based polymer resin, an emulsifier, organic or inorganic pigments, organic solvent, water and related additives that are uniformly mixed with each other. The water-based polymer resin may be, for example, a water-based polyurethane resin, a water-based polyester resin, a water-based acrylic resin, or a water-based alkyd resin, and so on. The above-mentioned solvent mainly includes water and alcohols.

The water-based polymer ink is preferably at least one of water-based polyurethane ink and water-based acrylic ink, but the present disclosure is not limited thereto.

The grid-like visual pattern 12 may be formed by printing a plurality of ink dots on the surface 11 of the polymer resin film 1 by using a printing roller transfer method or a digital inkjet method.

The color of the plurality of ink dots 12 preferably has a significant color difference from that of the surface 11 of the polymer resin film 1, so that the grid-like visual pattern 12 can be clearly presented.

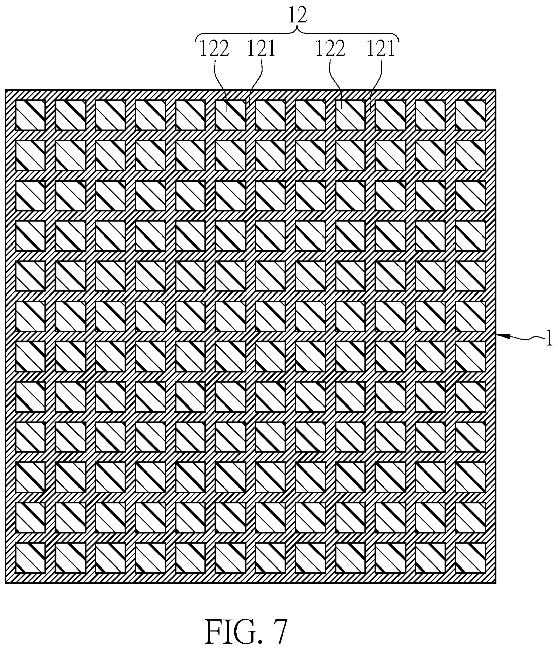

As shown in FIG. 7, the grid-like visual pattern 12 on the surface 11 of the polymer resin film 1 includes a plurality of geometric lines 121 and a plurality of geometric graphics 122.

The plurality of geometric lines 121 are interlaced and connected to each other and have a first color. Furthermore, the plurality of geometric graphics 122 are respectively located between the plurality of geometric lines 121 and have a second color that is different from the first color.

In order to enable the grid-like visual pattern 12 to be clearly presented, there must be a significant color difference between the first color of the plurality of geometric lines 121 and the second color of the plurality of geometric graphics 122.

The first color may be, for example, one of a dark color or a light color, and the second color may be, for example, another one of the dark color or the light color.

Referring to FIG. 7 again, the plurality of geometric lines 121 of the grid-like visual pattern 12 are straight lines crisscrossed and connected to each other. The plurality of geometric graphics 122 of the grid-like visual pattern 12 are located between and defined by the plurality of geometric lines 121 respectively. In the present embodiment, the plurality of geometric graphics 122 are respectively presented as squares, but the present disclosure is not limited thereto.

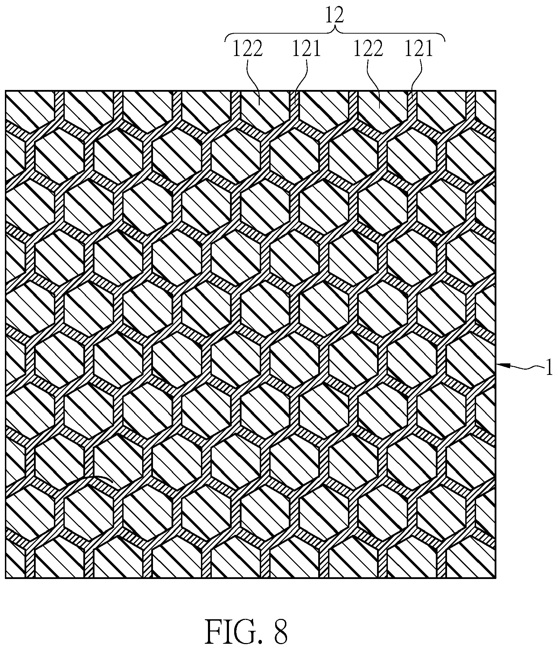

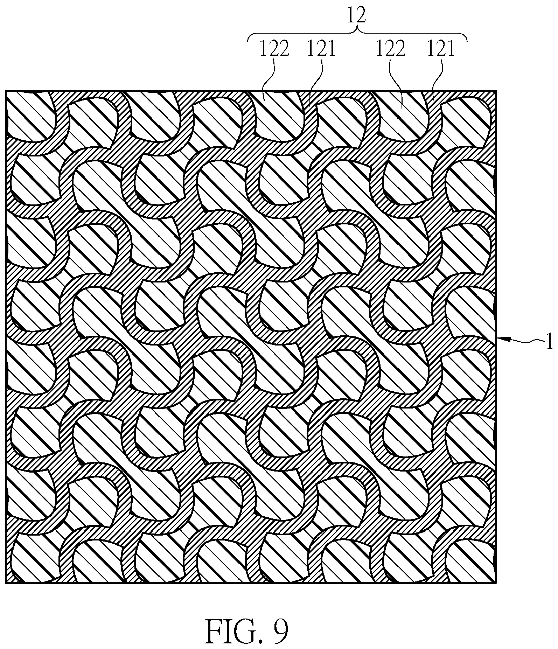

The plurality of geometric lines 121 may also be non-straight lines, such as curved lines or polylines. The plurality of geometric graphics 122 may also be presented as hexagonal shapes as shown in FIG. 8 or irregular curves as shown in FIG. 9 according to product requirements. In embodiments not illustrated in the drawings of the present disclosure, the plurality of geometric graphics 122 may also be respectively presented as circles, diamonds, triangles, or other shapes according to textile product requirements.

The plurality of geometric lines 121 of the grid-like visual pattern 12 are respectively composed of the ink dots, and the ink dots have a first color, such as a dark color. Therefore, the plurality of geometric lines 121 can present the first color. In addition, the surface 11 of the polymer resin film 1 itself presents the second color, such as a light color. Therefore, the plurality of geometric graphics 122 that are not covered by the plurality of geometric lines 121 and that are defined by the plurality of geometric lines 121 can present the second color, but the present disclosure is not limited thereto.

Since the aforementioned grid-like visual pattern 12 can only be used to provide a visual effect of having another mesh layer disposed on the polymer resin film 1 but cannot be used to provide a tactile effect and a touch feeling of a mesh fabric, the film material 100 of the present embodiment further includes a tactile structure module 2 to enable the film material 100 to have the tactile effect and the touch feeling of the mesh fabric without affecting the visual effect of the grid-like visual pattern 12.

Referring to FIG. 1 to FIG. 3 again, the tactile structure module 2 is disposed on the surface 11 of the polymer resin film 1 and partially covers the grid-like visual pattern 12.

The tactile structure module 2 includes a plurality of solid bodies 21, and all of the solid bodies 21 have visible light transmittance.

The plurality of solid bodies 21 are disposed on the surface 11 of the polymer resin film 1 at intervals to partially cover the grid-like visual pattern 12. That is, a part of the grid-like visual pattern 12 is covered by the plurality of solid bodies 21, and another part of the grid-like visual pattern 12 is exposed to an external environment through the gaps between the plurality of solid bodies 21.

Since the plurality of solid bodies 21 all have visible light transmittance, the grid-like visual pattern 12 on the surface 11 of the polymer resin film 1 is capable of being seen through the plurality of solid bodies 21, and the grid-like visual pattern 12 is visible on a side of the surface 11 of the polymer resin film 1.

In the present embodiment, the formation of the plurality of solid bodies 21 of the tactile structure module 2 may be, for example, using a method of imitation mesh processing or using a printing roller transfer method to arrange the plurality of solid bodies 21 each having a three-dimensional structure on the grid-like visual pattern 12 of the surface 11 of the polymer resin film 1, but the present disclosure is not limited thereto.

In the present embodiment, the plurality of solid bodies 21 may be partially disposed on the geometric lines 121 and partially disposed on the geometric graphics 122, but the solid bodies 21 will not affect the presentation of the geometric lines 121 and the geometric graphics 122.

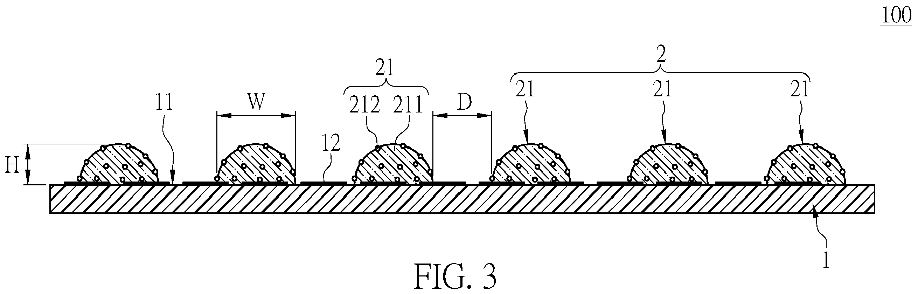

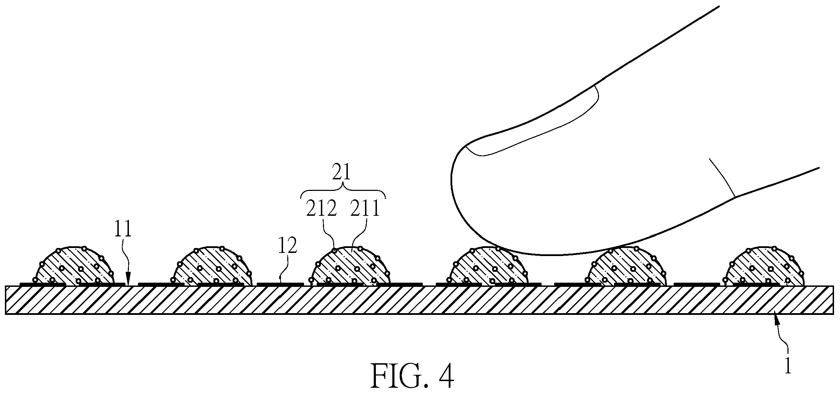

Referring to FIG. 3 and FIG. 4 again, a composition of each of the solid bodies 21 includes: a polymer resin material 211 and a plurality of insoluble solid mixtures 212 dispersed in the polymer resin material 211. In each of the solid bodies 21, at least a part of the insoluble solid mixtures 212 in the plurality of insoluble solid mixtures 212 are located in a surface layer of the solid body 21 and partially exposed to an external environment for a user to touch as shown in FIG. 4. Accordingly, the film material 100 can have a tactile effect and a touch feeling equivalent to that of a mesh fabric.

In each of the solid bodies 21, the polymer resin material 211 is a water-based polymer resin material. The water-based polymer resin material may be, for example, a water-based polyurethane (PU) resin material, a water-based polyester resin material, a water-based acrylic resin material, or a water-based alkyd resin material. In the present embodiment, the water-based polymer resin material 211 is preferably at least one of a water-based polyurethane resin material and a water-based acrylic resin material, but the present disclosure is not limited thereto.

Since the above-mentioned water-based polyurethane resin material and the water-based acrylic resin material both have good transparency, hardness, and adhesion, these water-based polymer resin materials enable the plurality of solid bodies 21 to have good transparency and hardness, and enable the plurality of solid bodies 21 to be stably disposed on the surface 11 of the polymer resin film 1 without coming off easily.

Since the polymer resin material 211 is the water-based polymer resin material, the solid bodies 21 of the present embodiment do not include volatile organic solvents (VOCs). For example, the aforementioned volatile organic solvent may be, for example, acetone, but the present disclosure is not limited thereto. Therefore, the film material 100 of the present embodiment can have the advantages of low toxicity, environmental friendliness, and human body friendliness.

As described above, the polymer resin film 1 is preferably a polyurethane (PU) resin film, a thermoplastic polyurethane (TPU) resin film, a polyethylene terephthalate (PET) resin film, a latex film, a polyester elastomer film or a composite film composed of at least two of the foregoing materials. The water-based polymer ink of the grid-like visual pattern 12 is preferably a water-based polyurethane ink or a water-based acrylic ink or a composite ink of the above-mentioned two materials. Therefore, whether the plurality of solid bodies 21 are in contact with the surface 11 of the polymer resin film 1 or the grid-like visual pattern 12 formed thereon, the solid bodies 21 can be firmly adhered on the polymer resin film 1 without coming off easily.

Although the ink of the present embodiment is a "water-based" polymer ink, and the polymer resin material 211 of the present embodiment is a "water-based" polymer resin material, the present disclosure is not limited thereto. For example, in another embodiment of the present disclosure, the ink may also be a "solvent-based" polymer ink, and the polymer resin material 211 may also be a "solvent-based" polymer resin material.

Referring to FIG. 3 and FIG. 4 again, the plurality of insoluble solid mixtures 212 are evenly dispersed in the polymer resin material 211, and the insoluble solid mixtures 212 located in the surface layer of the solid body 21 are partially exposed to the external environment for a user to touch.

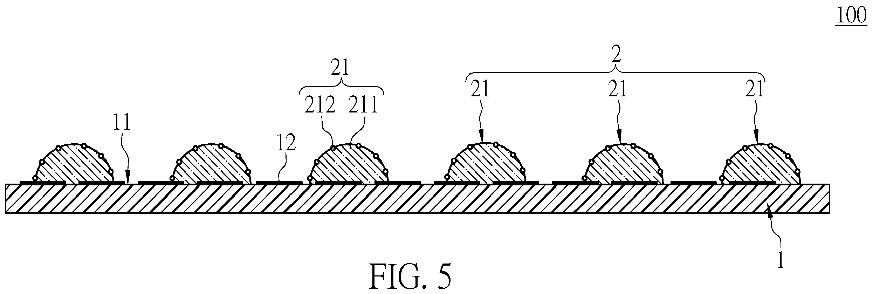

As shown in FIG. 5, in a variant embodiment of the present disclosure, the plurality of insoluble solid mixtures 212 are only distributed in the surface layer of the solid body 21 and partially exposed to the external environment, and there are no insoluble solid mixtures 212 distributed inside the solid body 21.

That is, as long as the tactile structure module 2 has the structural feature that the insoluble solid mixtures 212 are distributed in the surface layer of the solid body 21 and partially exposed to the external environment, this structural feature falls within the spirit and scope of the present disclosure.

Referring to FIG. 3 again, in each of the solid bodies 21, each of the insoluble solid mixtures 212 is dispersed in but not dissolved in the polymer resin material 211. That is, each of the insoluble solid mixtures 212 retains its original material shape in the polymer resin material 211, and each of the insoluble solid mixtures 212 and the polymer resin material 211 have an obvious interface therebetween.

In each of the solid bodies 21, a Mohs hardness of each of the insoluble solid mixtures 212 is different from a Mohs hardness of the polymer resin material 211.

In the present embodiment, the Mohs hardness of each of the insoluble solid mixtures 212 is greater than the Mohs hardness of the polymer resin material 211. Accordingly, the mesh tactile effect and touch feeling of the film material 100 can be effectively improved.

The Mohs hardness of each of the insoluble solid mixtures 212 is approximately between 4 and 10, and the Mohs hardness of the polymer resin material 211 is approximately between 1 and 4, but the present disclosure is not limited thereto.

It is worth mentioning that general polymer resin materials (i.e., polyurethane or acrylic) have low hardness, which cannot provide sufficient mesh tactile effect. Accordingly, in order to provide sufficient mesh tactile effect, the plurality of solid bodies 21 of the tactile structure module 2 of the present embodiment further have insoluble solid mixtures having higher hardness added therein. Therefore, the overall hardness of the plurality of solid bodies 21 can be effectively improved.

Since the insoluble solid mixtures 212 are distributed in the surface layer of the solid body 21 and are partially exposed to the external environment, when a user touches the film material 100, the user can touch the polymer resin material 211 and the insoluble solid mixtures 212 of the tactile structure module 2 at the same time (as shown in FIG. 4). Accordingly, the user can feel sufficient mesh tactile effect from the film material 100.

Referring to FIG. 3 and FIG. 4 again, in each of the solid bodies 21, the insoluble solid mixtures 212 in the surface layer of the solid body 21 partially protrude from an outer surface of the solid body 21 and are partially embedded in the solid body 21, but the present disclosure is not limited thereto.

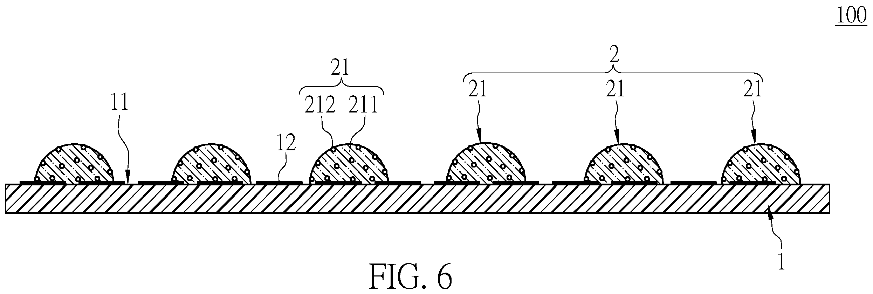

As shown in FIG. 6, in a variant embodiment of the present disclosure, the insoluble solid mixtures 212 in the surface layer of the solid body 21 are partially exposed from and aligned with the outer surface of the solid body 21, and are partially embedded in the solid body 21. In this variant embodiment, when a user touches the film material 100, the user can still touch the polymer resin material 211 and the insoluble solid mixtures 212 of the tactile structure module 2 at the same time, thereby feeling sufficient mesh tactile effect.

The plurality of insoluble solid mixtures are at least one of inorganic solid particles and organic solid particles.

The material of the inorganic solid particles may be, for example, at least one of silicon dioxide, titanium dioxide, iron oxide, and metal hydroxide. The organic solid particles may be at least one of polymer resin particles (i.e., plastic particles), siloxane particles, and plant-derived particles (i.e., coffee grounds).

The material source of the plurality of insoluble solid mixtures may also be recycled materials, such as recycled coffee grounds, discarded fishing nets, or scraps of electronic parts. Therefore, the film material 100 of the present embodiment can further meet demands of environmental protection and energy saving.

In order to enable the plurality of insoluble solid mixtures 212 to be more uniformly dispersed in the polymer resin material 211, the composition of each of the solid bodies 21 further includes a cross-linking agent, and the cross-linking agent is configured to assist the plurality of insoluble solid mixtures 212 to be dispersed in the polymer resin material 211.

In the present embodiment, the cross-linking agent is at least one of an isocyanate cross-linking agent a melamine cross-linking agent and an aziridine cross-linking agent. In addition, a content range of the cross-linking agent in the solid body 21 is preferably between 0.5wt.% and 10wt.%, and more preferably between 3wt.% and 5wt.%, but the present disclosure is not limited thereto.

Referring to FIG. 1 to FIG. 3 again, the size, arrangement, and distribution density of the plurality of solid bodies 21 of the tactile structure module 2 of the present embodiment have a preferred configuration.

The plurality of solid bodies 21 of the tactile structure module 2 are arranged on the surface 11 of the polymer resin film 1 in a matrix arrangement (as shown in FIG. 1) or in a staggered arrangement (not shown in the drawings). The plurality of solid bodies 21 of the tactile structure module 2 are not directly in contact with each other.

As shown in FIG. 3, each of the solid bodies 21 has a width (W) between 30 micrometers and 1,000 micrometers and has a height (H) between 100 micrometers and 1,000 micrometers, and each of the solid bodies 21 and the adjacent solid body 21 have a gap (D) between 50 micrometers and 2,000 micrometers therebetween.

The coverage rate of the solid bodies 21 of the tactile structure module 2 on the surface 11 of the polymer resin film 1 is preferably between 20% and 90%, and more preferably between 50% and 80%.

According to the above configuration, the tactile structure module 2 of the film material 100 of the present embodiment can be used to provide a tactile effect and touch feel equivalent to mesh fabric, but the visual effect of the grid-like visual pattern 12 will not be affected.

It should be noted that the above-mentioned width W of the solid body 21 is defined as a maximum width of the solid body 21 parallel to the surface 11 of the polymer resin film 1. The above-mentioned height H of the solid body 21 is defined as a maximum height of the solid body 21 perpendicular to the surface 11 of the polymer resin film 1. The above-mentioned gap D is defined as a shortest distance between each of the solid bodies 21 and the adjacent solid body 21. In each of the solid bodies 21, the plurality of insoluble solid mixtures 212 have an average particle size between 20 micrometers and 150 micrometers, and preferably between 60 micrometers and 120 micrometers. In addition, a content range of the plurality of insoluble solid mixtures 212 in the solid body 21 is between 1wt.% and 10wt.%, and preferably between 3wt.% and 7wt.%. Therefore, each of the solid bodies 21 has a visible light transmittance of not less than 50 %, and preferably not less than 70 %.

If the particle size and/or the content range of the plurality of insoluble solid mixtures 212 are greater than the upper limit of the above range, the visible light transmittance of the plurality of solid bodies 21 will become insufficient, and the plurality of solid bodies 21 may not be firmly adhered on the surface 11 of the polymer resin film 1.

On the contrary, if the particle size and/or the content range of the plurality of insoluble solid mixtures 212 are less than the lower limit of the above range, the plurality of solid bodies 21 cannot provide sufficient mesh tactile effect.

As shown in FIG. 3, in a cross sectional view of the film material 100 of the present embodiment, each of the solid bodies 21 is presented as a semicircular shape, but the present disclosure is not limited thereto.

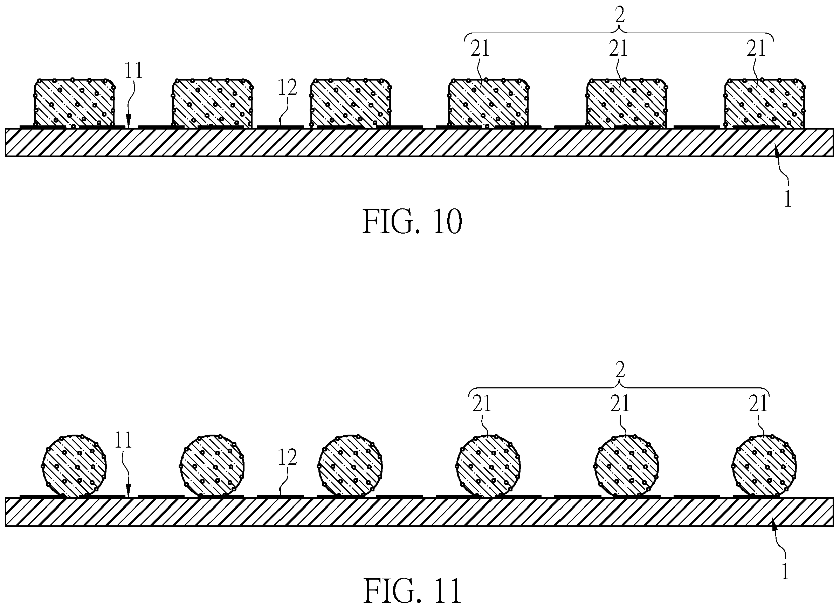

For example, each of the solid bodies 21 may also be presented as a rectangular shape (as shown in FIG. 10), a circular shape (as shown in FIG. 11), or other shapes that can provide the tactile effect and touch feeling of the mesh fabric.

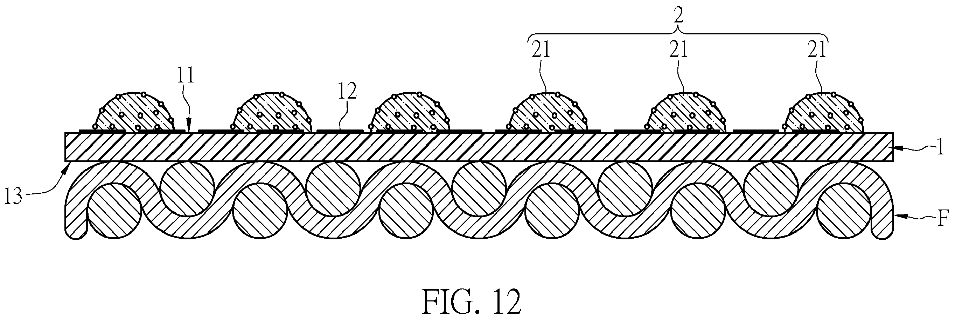

As shown in FIG. 12, the other surface 13 of the polymer resin film 1 of the present embodiment away from the tactile structure module 2 can be used for bonding to a textile. Accordingly, a structural strength of the film material 100 can be reinforced.

The textile has a plurality of warp yarns and a plurality of weft yarns (not labeled in the drawings) that are interlaced with each other; or the textile may also be, for example, a polyester fiber, a polyamide fiber, a polypropylene fiber, an acrylic fiber, or an elastic fiber (not shown in the drawings).

### [Second Embodiment]

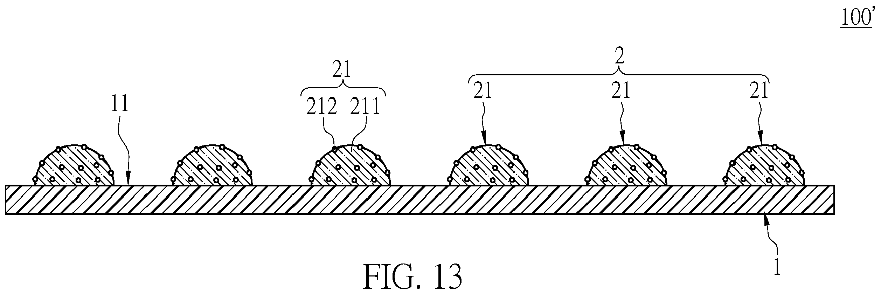

Referring to FIG. 13, a second embodiment of the present disclosure is illustrated. The present embodiment is substantially the same as the above-mentioned first embodiment, except that the film material 100' of the present embodiment does not have a grid-like visual pattern 12.

Specifically, the film material 100' of the present embodiment includes a polymer resin film 1 and a tactile structure module 2. The tactile structure module 2 includes a plurality of solid bodies 21. The plurality of solid bodies 21 are arranged on a surface 11 of the polymer resin film 1 at intervals. Further, a composition of each of the solid bodies 21 includes: a polymer resin material 211 and a plurality of insoluble solid mixtures 212 dispersed in the polymer resin material 211. In each of the solid bodies 21, at least a part of the insoluble solid mixtures 212 in the plurality of insoluble solid mixtures 212 are located in a surface layer of the solid body 21 and partially exposed to an external environment for a user to touch.

### [Third Embodiment]

A third embodiment of the present disclosure provides a method for producing a film material (not shown in the drawings). The manufacturing method of the present embodiment specifically describes how the film material 100 of the first embodiment is manufactured, but the film material 100 is not limited to be manufactured by the manufacturing method described in the present embodiment.

The method for producing the film material includes steps S110 to S140. It should be noted that the order of the steps and way of the actual operation described in the present embodiment can be adjusted according to requirements and are not limited to those described in the present embodiment.

The step S110 includes: providing a polymer resin film 1.

The step S120 includes: printing an ink material on a surface 11 of the polymer resin film 1 according to a predetermined pattern, and evaporating liquid components (i.e., water) from the ink material, so that a grid-like visual pattern 12 is formed on the surface 11 of the polymer resin film 1.

The above-mentioned liquid components can be evaporated by baking at high temperature (i.e., 80 °C to 180 °C).

The step S130 includes: forming a plurality of liquid pastes on the surface 11 of the polymer resin film 1.

The above-mentioned liquid pastes may be formed by, for example, a method of imitation mesh processing or printing roller transfer method, but the present disclosure is not limited thereto.

The plurality of liquid pastes are formed on the surface 11 of the polymer resin film 1 at intervals, and a composition of each of the liquid pastes includes: a polymer resin material 211 and a plurality of insoluble solid mixtures 212 dispersed in the polymer resin material 211.

The step S140 includes: evaporating liquid components (i.e., water) from the plurality of liquid pastes, so that the plurality of liquid pastes are respectively formed into a plurality of solid bodies 21 that are adhered on the surface 11 of the polymer resin film 1, and the plurality of solid bodies 21 are partially covered on the grid-like visual pattern 12.

The above-mentioned liquid components can be evaporated by baking at high temperature (i.e., 80°C to 180°C), so that the polymer resin material 211 in the plurality of liquid pastes undergoes a curing reaction. During the curing reaction, the plurality of liquid pastes are respectively formed into a plurality of solid bodies 21 that are adhered on the surface 11 of the polymer resin film 1.

In each of the solid bodies 21, at least a part of the insoluble solid mixtures 212 in the plurality of insoluble solid mixtures 212 are located in a surface layer of the solid body 21 and partially exposed to an external environment for a user to touch.

The plurality of solid bodies 21 all have visible light transmittance, so that the grid-like visual pattern 12 on the surface 11 of the polymer resin film 1 is capable of being seen through the plurality of solid bodies 21, and the grid-like visual pattern 12 is visible on a side of the surface 11 of the polymer resin film 1.

### [Advantageous Effects]

In conclusion, the film material with the tactile structure and the method for producing the same of the present embodiment enable the film material to have the visual effect of having double-layer fabric and sufficient mesh tactile effect under the condition of light and thin thickness by virtue of "a composition of each of the solid bodies including: a polymer resin material and a plurality of insoluble solid mixtures dispersed in the polymer resin material; in which at least a part of the insoluble solid mixtures in the plurality of insoluble solid mixtures are located in a surface layer of the solid body and partially exposed to an external environment for a user to touch" and by virtue of "the plurality of solid bodies all having visible light transmittance, so that the grid-like visual pattern on the surface of the polymer resin film is capable of being seen through the plurality of solid bodies, and the grid-like visual pattern is visible on a side of the surface of the polymer resin film."

More specifically, for the conventional double-layer film material composed of a layer of base cloth and a layer of mesh cloth, although the lightest mesh material is used, a weight of the double-layer film material is still at least greater than 50 g/m². Compared with the above-mentioned double-layer film materials, a weight of the film material (single-layer film material with the double-layer visual effect) of the present embodiment can be greatly reduced to below 50 g/m², which can meet the requirements of some end products (i.e., products with lightweight needs).

It is worth mentioning that currently available cloth types with low denier numbers are cloth types with 10 deniers. In the future, when the textile technology is more advanced, developing fabrics with a lower denier number will become possible. If the cloth with a lower denier number is used as the base material of the film material of the present disclosure, a weight of the film material of the present embodiment may be greatly reduced to below 40 g/m².

The foregoing description of the exemplary embodiments of the disclosure has been presented only for the purposes of illustration and description and is not intended to be exhaustive or to limit the disclosure to the precise forms disclosed. Many modifications and variations are possible in light of the above teaching.

The embodiments were chosen and described in order to explain the principles of the disclosure and their practical application so as to enable others skilled in the art to utilize the disclosure and various embodiments and with various modifications as are suited to the particular use contemplated. Alternative embodiments will become apparent to those skilled in the art to which the present disclosure pertains without departing from its spirit and scope.

## Claims

1. A film material (100) with a tactile structure, comprising:
a polymer resin film (1); and
a tactile structure module (2) including a plurality of solid bodies (21), and the plurality of solid bodies (21) being arranged on a surface (11) of the polymer resin film (1) at intervals; wherein a composition of each of the solid bodies (21) includes: a polymer resin material (211) and a plurality of insoluble solid mixtures (212) dispersed in the polymer resin material (211); wherein at least a part of the insoluble solid mixtures (212) in the plurality of insoluble solid mixtures (212) are located in a surface layer of the solid body (21) and partially exposed to an external environment for a user to touch.

2. The film material (100) according to claim 1, wherein, in each of the solid bodies (21), each of the insoluble solid mixtures (212) is dispersed in but not dissolved in the polymer resin material (211), and each of the insoluble solid mixtures (212) has a Mohs hardness that is greater than that of the polymer resin material (211).

3. The film material (100) according to claim 2, wherein, in each of the solid bodies (21), the insoluble solid mixtures (212) located in the surface layer of the solid body (21) partially protrude from an outer surface of the solid body (21) for the user to touch.

4. The film material (100) according to claim 1, wherein the polymer resin film (1) is at least one of a polyurethane (PU) resin film, a thermoplastic polyurethane (TPU) resin film, a polytetrafluoroethylene (PTFE) resin film, a polyethylene (PE) resin film, a polypropylene (PP) resin film, a polyethylene terephthalate (PET) resin film, a latex film, a polyester elastomer film, and a polymer composite film; wherein, in each of the solid bodies (21), the polymer resin material (211) is a water-based polymer resin material, and the composition of the solid body (21) does not include any volatile organic solvent.

5. The film material (100) according to claim 4, wherein, in each of the solid bodies (21), the water-based polymer resin material is at least one of a water-based polyurethane resin material and a water-based acrylic resin material.

6. The film material (100) according to claim 5, wherein, in each of the solid bodies (21), the plurality of insoluble solid mixtures (212) are at least one of inorganic solid particles and organic solid particles.

7. The film material (100) according to claim 6, wherein, in each of the solid bodies (21), the composition of the solid body (21) further includes a cross-linking agent, and the cross-linking agent is configured to assist the plurality of insoluble solid mixtures (212) to be dispersed in the polymer resin material (211); wherein the cross-linking agent is at least one of an isocyanate cross-linking agent, a melamine cross-linking agent and an aziridine cross-linking agent, and a content range of the cross-linking agent in the solid body (21) is between 0.5 wt.% and 10 wt.%.

8. The film material (100) according to claim 1, wherein, in the tactile structure module (2), the plurality of solid bodies (21) are arranged on the surface (11) of the polymer resin film (1) in a matrix arrangement or in a staggered arrangement, and the plurality of solid bodies (21) are not in contact with each other; wherein each of the solid bodies (21) has a width (W) between 30 micrometers and 1,000 micrometers and has a height (H) between 100 micrometers and 1,000 micrometers, and each of the solid bodies (21) and the adjacent solid body (21) have a gap (D) between 50 micrometers and 2,000 micrometers therebetween; and wherein, in each of the solid bodies (21), the plurality of insoluble solid mixtures (212) have an average particle size between 20 micrometers and 150 micrometers and have a content range between 0.5wt.% and 10wt.%, so that each of the solid bodies (21) has a visible light transmittance not less than 50%.

9. The film material (100) according to claim 1, wherein the surface (11) of the polymer resin film (1) is colored to form a grid-like visual pattern (12), and the plurality of solid bodies (21) are partially covered on the grid-like visual pattern (12); wherein the plurality of solid bodies (21) all have visible light transmittance, so that the grid-like visual pattern (12) on the surface (11) of the polymer resin film (1) is capable of being seen through the plurality of solid bodies (21), and the grid-like visual pattern (12) is visible on a side of the surface (11) of the polymer resin film (1); wherein the surface (11) of the polymer resin film (1) is substantially a flat surface, and the grid-like visual pattern (12) is composed of a plurality of ink dots; wherein, in each of the solid bodies (21), the polymer resin material (211) is a water-based polymer resin material; and wherein, in the grid-like visual pattern (12), the plurality of ink dots are water-based polymer ink dots, and the water-based polymer resin material of the plurality of solid bodies (21) is at least partially adhered on the water-based polymer ink dots.

10. A method for producing a film material (100), comprising:
providing a polymer resin film (1);
printing an ink material on a surface (11) of the polymer resin film (1) according to a predetermined pattern, and evaporating liquid components from the ink material, so that a grid-like visual pattern (12) is formed on the surface (11) of the polymer resin film (1);
forming a plurality of liquid pastes on the surface (11) of the polymer resin film (1); wherein the plurality of liquid pastes are formed on the surface (11) of the polymer resin film (1) at intervals, and a composition of each of the liquid pastes includes: a polymer resin material (211) and a plurality of insoluble solid mixtures (212) dispersed in the polymer resin material (211); and
evaporating liquid components from the plurality of liquid pastes, so that the plurality of liquid pastes are respectively formed into a plurality of solid bodies (21) that are adhered on the surface (11) of the polymer resin film (1), and the plurality of solid bodies (21) are partially covered on the grid-like visual pattern (12);
wherein, in each of the solid bodies (21), at least a part of the insoluble solid mixtures (212) in the plurality of insoluble solid mixtures (212) are located in a surface layer of the solid body (21) and partially exposed to an external environment for a user to touch;
wherein the plurality of solid bodies (21) all have visible light transmittance, so that the grid-like visual pattern (12) on the surface (11) of the polymer resin film (1) is capable of being seen through the plurality of solid bodies (21), and the grid-like visual pattern (12) is visible on a side of the surface (11) of the polymer resin film (1).
